# EUROPÄISCHE PATENTSCHRIFT

(11) **EP 0 840 909 B1**
(45) Veröffentlichungstag und Bekanntmachung des Hinweises auf die Patenterteilung: **31.03.1999**
(21) Anmeldenummer: 96926377.1
(22) Anmeldetag: 20.07.1996
(51) Int. Cl.: G05B 19/409

(54) **STEUER- UND PROGRAMMIEREINRICHTUNG**
CONTROL AND PROGRAMMING UNIT
DISPOSITIF DE COMMANDE ET DE PROGRAMMATION

(30) Priorität: 22.07.1995 DE 29511864 U; 29.09.1995 DE 19536293
(43) Veröffentlichungstag der Anmeldung: 13.05.1998
(73) Patentinhaber: KUKA Roboter GmbH, 86165 Augsburg (DE)
(72) Erfinder: WÖRN, Heinz, D-86316 Derching (DE); HAJDU, Erwin, D-86169 Augsburg (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9603212
(87) Internationale Veröffentlichungsnummer: WO9704370

(56) Entgegenhaltungen:
- EP-A- 0 303 708
- EP-A- 0 535 622
- WO-A-89/11382
- DE-A- 3 526 075
- DE-U- 9 101 470
- GB-A- 2 204 426
- US-A- 4 723 207
- US-A- 4 888 708
- US-A- 5 267 181
- US-A- 5 432 510
- PATENT ABSTRACTS OF JAPAN vol. 011, no. 248 (P-604), 13.August 1987 & JP 62 055707 A (MITSUBISHI ELECTRIC CORP), 11.März 1987,

## Beschreibung

Die Erfindung betrifft eine Steuer- und Programmiereinrichtung für einen Manipulator mit den Merkmalen im Oberbegriff des Hauptanspruches.

Aus der EP-A-0 303 708 und der WO89/11382 sind derartige Steuer- und Programmiereinrichtungen bekannt. Sie bestehen aus einer Manipulatorsteuerung und einem Rechner mit einer Grafikeinheit sowie einem tragbaren Programmiergerät. Das Programmiergerät ist per Kabel mit dem Rechner verbunden. Diese Anordnung erlaubt es, mit dem tragbaren Programmiergerät den Manipulator, der häufig weit von der Manipulatorsteuerung entfernt steht, an seinem Einsatzort zu steuern und zu programmieren. Die Steuer- und Programmdaten werden vom Programmiergerät über die besagte Kabelverbindung an den Rechner übermittelt und von diesem gegebenenfalls aufbereitet und an die Manipulatorsteuerung weitergegeben. Von dieser aus wird dann wieder der Manipulator entsprechend des vorgegebenen Programms gesteuert.

Die vorbekannten Programmiergeräte haben einen beschränkten Komfort und Nutzen. Sie sind mit einfachen Bildschirmen ausgerüstet, die eine eigene Grafikeinheit besitzen. Die Bildschirme haben einen beschränkten Darstellungsumfang und sind häufig lediglich als Zeilendisplays ausgebildet. Im Grunde können sie nur einfache Zeichen, wie Buchstaben oder Zahlen darstellen. Außerdem ist der Bildschirm aus Gründen der Handhabung monochrom und relativ klein. Eine eigentlich wünschenswerte Verbesserung und Vergrößerung der Bildschirme scheiterte bisher an dem damit einhergehenden Gewichtsproblem. Solche Bildschirme benötigen andere aufwendigere Graphikeinheiten, die zu einem deutlich höheren Gewicht führen. Das erschwert die Bedienung und ist für die häufig länger dauernden Programmiersitzungen unergonomisch.

Die bekannten Programmiergeräte sind über eine mehradrige elektrische Leitung mit dem Schaltschrank des Manipulators verbunden und haben sonst kaum andere Kommunikationsmöglichkeiten. Der Bediener ist in der Programmierung dadurch eingeschränkt. Zusätzliche Programmiermaßnahmen müssen im Schaltschrank vorgenommen werden, wodurch häufig größere Wege zurückgelegt werden müssen. Die Handhabung ist dadurch unpraktisch und zeitaufwendig.

Aus der GB-A-2 204 426, der US-A-5,267,181 und der US-A-5,432,510 sind ähnliche Steuer- und Programmiereinrichtungen für andere Einsatzzwecke bekannt, die die gleichen Probleme haben.

Die EP-A 0 535 622 zeigt einen Laptop-Computer mit einem LCD-Bildschirm, an den ein zweiter externer Bildschirm mit größerer Bildfläche und höherer Auflösung über Kabel angeschlossen werden kann. Die im Laptop eingebaute Graphikkarte kann beide Bildschirme ansteuern, wobei über einen Umschalter zwischen den Bildschirmen gewechselt werden kann.

Es ist daher Aufgabe der vorliegenden Erfindung, eine besser geeignete Steuer- und Programmiereinrichtung aufzuzeigen.

Die Erfindung löst diese Aufgabe mit den Merkmalen im Hauptanspruch.

Bei der erfindungsgemäßen Steuer- und Programmiereinrichtung hat das Programmiergerät einen Bildschirm ohne eigene Grafikeinheit, was das Gewicht des Programmiergerätes deutlich vermindert. Der Bildschirm erhält die zur Darstellung erforderlichen Bildinformationen mittels Datenfernübertragung von der Grafikeinheit des Rechners der Manipulatorsteuerung. Die Grafikeinheit kann sowohl den Bildschirm des Programmiergerätes betreiben, wie auch einen eventuell vorhandenen Bildschirm des Rechners.

Die erfindungsgemäße Gestaltung ist von besonderem Vorteil, wenn das Programmiergerät einen höherwertigen Bildschirm mit größerer Fläche und umfassenderen Darstellungsmöglichkeiten, insbesondere einen grafikfähigen Farbbildschirm aufweist. Je komplexer die darzustellenden Bildinhalte sind, desto aufwendiger und schwerer würde die normalerweise hierfür erforderliche Grafikkarte werden. Die Vorteile der Erfindung wirken sich hierbei umso stärker aus.

Die Grafikeinheit im Rechner hat vorzugsweise eine eigene Schnittstelle zur Datenfernübertragung, über die sie an den Bildschirm des Programmiergerätes die reinen für den direkten Bildaufbau erforderlichen Daten, d.h. bei heutigen Pixel-Bildschirmen die Pixel-Informationen, übermittelt. Dies sind für einen Farbbildschirm beispielsweise die Farbinformationen rot/grün/blau und die Pixel-Position.

Vorzugsweise verfügt die Grafikeinheit im Rechner über eine geeignete Hardware zur Bildgenerierung, insbesondere eine Grafikkarte. Diese kann separat als Steckkarte angeordnet oder in die Hauptplatine des Rechners integriert sein. Die Grafikinformationen werden vorzugsweise als Parallelsignale bereitgestellt und über einen geeigneten Parallel/Seriell-Wandler an die serielle Schnittstelle gegeben.

Der Bildschirm des Programmiergerätes, der vorzugsweise als flacher farbiger LCD-Bildschirm ausgebildet ist, besitzt eine integrierte Pixel-Ansteuerung mit einer vorgeschalteten seriellen Schnittstelle und einem zwischengeschalteten Wandler, der die seriell übertragenen Bildinformationen wieder in Parallelsignale für den Bildschirm zurückwandelt.

Das Programmiergerät verfügt über ausgedehnte Kommunikationsmöglichkeiten. Es hat ein oder mehrere zusätzliche Schnittstellen zur Verbindung mit externen Ein- oder Ausgabegeräten, z.B. Tastaturen oder Bildschirmen, Kommunikationsmittel etc. und/oder externen Recheneinheiten. Letztere können z.B. Laptops für Programmierzwecke etc. sein. Für die Übermittlung der Bildinformationen kann eine eigene Schnittstelle mit eigener Datenfernübertragung vorhanden sein. Die Anordnung kann aber auch in eine umfassendere Schnittstelle integriert sein, die zur Übermittlung weiterer Daten, z.B. der Steuer- und Programmdaten, geeignet und vorgesehen ist.

Die Datenfernübertragung kann auf beliebig geeignete Weise erfolgen, das heißt z.B. über ein Kabel, aber auch drahtlos über Funk, Infrarot oder sonstige Übertragungsmittel. Die Schnittstellen haben vorzugsweise elektrische Kontakte, können aber auch Anschlußmöglichkeiten für andere, z.B. optische Ubertragungsmittel, wie Lichtleitkabel etc. haben.

Die Schnittstellen befinden sich vorzugsweise versenkt am Gehäuse. Sie können unterschiedlich ausgebildet sein und Kabelstecker, Schnittstellenkarten oder sonstige geeignete Kommunikationsmittel aufnehmen. Ein günstiger Platz ist der vordere und/oder hintere Gehäuserand. In diesem Bereich ist vorzugsweise auch der Auslaß für das Verbindungskabel zum Manipulator bzw. zu dessen Steuerung, sofern hierauf nicht aufgrund der drahtlosen Datenfernübertragung verzichtet werden kann. Die Gestaltung erlaubt eine weitgehend störungsfreie und ergonomische Handhabung und Bedienung des Programmiergeräts. Außerdem sind die Schnittstellen und Kabel an diesen Stellen wenig mechanisch belastet.

Das Programmiergerät verfügt über zwei oder mehr, vorzugsweise mindestens drei oder vier ergonomisch ausgeformte Griffbereiche. Durch diese verschiedenen Greifmöglichkeiten kann der Bediener die Handhaltung öfter wechseln, was Ermüdungserscheinungen wirksam vorbeugt. Außerdem sind die Griffbereiche ergonomisch ausgeformt und begünstigen eine ermüdungsarme Handhaltung. Die Schnittstellen fügen sich in diese Gestaltung günstig ein.

In der bevorzugten Ausführungsform sind an den Gehäuserändern mindestens zwei, vorzugsweise drei Griffleisten angeformt, die eine besonders günstige ergonomische Formgebung haben. Den Griffleisten sind dabei auch zumindest ein Teil der Funktionstasten in Fingergreifnähe zugeordnet, so daß die Tasten bequem betätigt werden können, ohne daß der Bediener die Handhaltung wechseln oder gar seine Hand vom Gerät lösen muß. In ergonomisch besonders günstiger Weise sind die Funktionstasten an der Gehäuseoberseite angeordnet und mit dem Daumen erreichbar. An der Gehäuseunterseite befinden sich in der Nähe der Griffleisten und in griffgünstiger Lage jeweils ein oder mehrere Schalttasten, die beispielsweise als Zustimmungstaste und/oder Start/Stop-Taste ausgebildet sind. Dabei ist es ferner günstig, wenn die Schalttasten und die Funktionstasten mehrfach vorhanden sind, so daß die verschiedenen vorgesehenen Funktionen aus allen Griffstellungen heraus durchführbar sind.

In ergonomisch besonders günstiger Weise ist an mindestens einer Griffleiste eine vorstehende Ballenauflage vorhanden. Wenn ein Joystick als mehrachsig bewegliches Steuerorgan eingesetzt wird, empfiehlt es sich, diesen in der Nähe der Ballenauflage anzuordnen und seitlich vorstehen zu lassen. Dadurch kann das Steuerorgan bequem von der Griffleiste aus erreicht und betätigt werden, ohne daß der Bediener umgreifen muß.

Außer den an den Gehäuserändern angeordneten Griffleisten empfiehlt es sich auch, an der Gehäuseunterseite einen Griffzapfen anzuordnen. Vorteilhafterweise sind zwei Zapfen vorhanden, die mit entsprechend abgeschrägten Fußflächen als Tischaufsteller fungieren. Das Programmiergerät kann dadurch auch in ergonomisch vorteilhafter Schräglage auf einem festen Untergrund plaziert und bedient werden. Für diese Aufstellung ist die Schnittstellenanordnung an der Gehäuserückseite besonders günstig.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Figur 1:: eine schematische Übersicht der Steuer- und Programmiereinrichtung in Verbindung mit einem Manipulator und einer Manipulatorsteuerung,

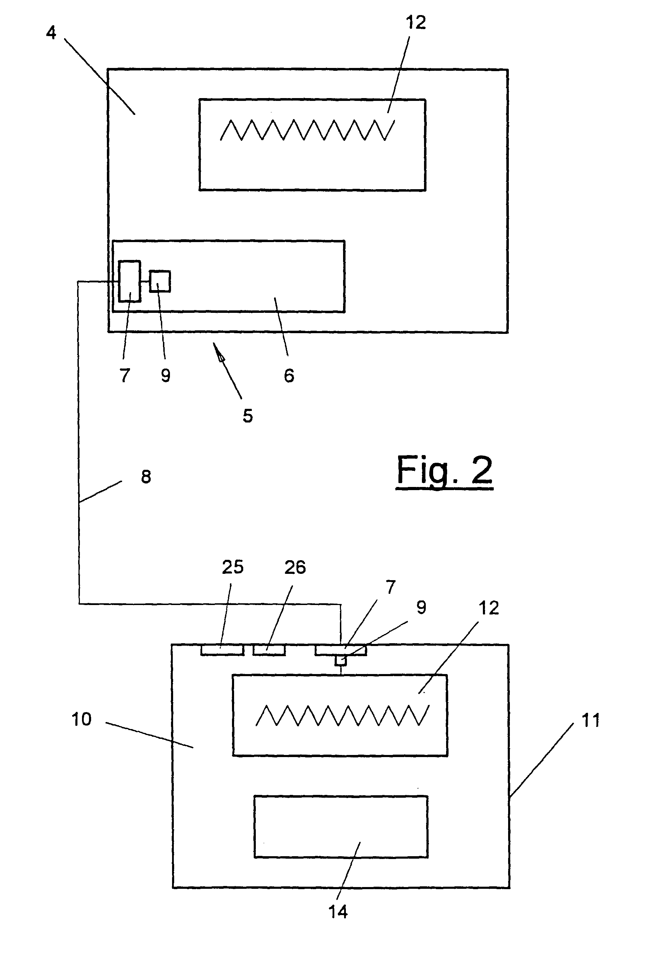

- Figur 2:: eine Detailansicht eines Rechners und eines Programmiergerätes,
- Figur 3:: eine stärker detaillierte Draufsicht auf das Programmiergerät,
- Figur 4:: eine Seitenansicht des Programmiergerätes entsprechend Pfeil IV von Figur 3,
- Figur 5:: eine Stirnansicht des Programmiergerätes gemäß Pfeil V von Figur 3 und
- Figur 6:: eine vereinfachte Draufsicht gemäß Figur 3 mit sichtbar gemachter Unterseite des Programmiergerätes.

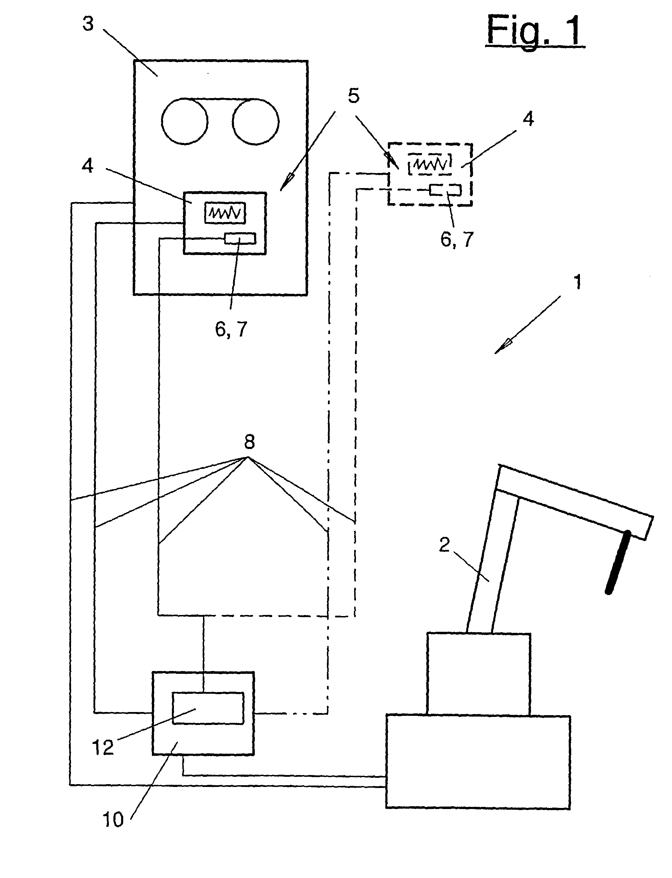

In Figur 1 ist in der Übersicht eine Steuer- und Programmiereinreichtung (1) für einen Manipulator (2), vorzugsweise einen mehrachsigen Industrieroboter, nebst einer Nanipulatorsteuerung (3) dargestellt. Der Manipulator (2) kann von der Manipulatorsteuerung (3) über eine größere Entfernung, z. B. 100 m und mehr distanziert sein. Zur Fernbedienung, Steuerung und Programmierung des Manipulators (2) ist ein tragbares Programmiergerät (10) vorgesehen, das über entsprechende Datenfernübertragungsmittel (8), z.B. mehradrige Kabel oder Leitungen mit der Manipulatorsteuerung (3) und evtl. mit dem Manipulator (2) verbunden ist. Ferner ist auch der Manipulator (2) über derartige Datenfernübertragungen (8) mit der Manipulatorsteuerung (3) verbunden.

Zur Generierung und Aufbereitung der Steuer- und Programmdaten ist ein Rechner (4), z.B. ein Personal-Computer, vorgesehen, der unterschiedlich ausgebildet sein kann. Einerseits ist es möglich, den Rechner (4) in die Manipulatorsteuerung (3) zu integrieren. Bei dem Rechner (4) kann es sich aber auch um ein externes Gerät handeln, z. B. einen Laptop, der seinerseits mobil einsetzbar ist. Zur Übermittlung der Steuer- und Programmierdaten kann das Programmiergerät (10) mit dem Rechner (4) per Datenfernübertragung (8) verbunden sein. Das Programmiergerät (10) beinhaltet in seinem Gehäuse (11) eine nicht näher dargestellte und beschriebene Rechen- bzw. Steuereinheit, mit der nachfolgend noch näher beschriebene Bedienelemente Steuerbefehle an den Manipulator (2) und/oder die Manipulatorsteuerung (3) übermittelt werden können. Über das Programmiergerät (10) läßt sich der Manipulator (2) am Einsatzort fernsteuern und programmieren, wobei der Bediener die Manipulatorbewegungen direkt überwachen und kontrollieren kann. Der Bediener kann sich mit dem Programmiergerät (10) vom Manipulator (2) entfernen und das Gerät von einem sicheren Standort aus bedienen. Bei der Programmierung der Manipulatorsteuerung (3) sind über das Programmiergerät (10) beliebige Teaching-Modes nutzbar.

Das Programmiergerät (10) besitzt ein Gehäuse (11) mit einem Bildschirm (12), der vorzugsweise als flaches LCD-Display ausgebildet ist. Es kann auch ein Bildschirm mit Aktiv-Matrix sein. Der Bildschirm (12) ist grafikfähig und vorzugsweise als Farbbildschirm ausgebildet.

Der Bildschirm (12) im Programmiergerät (10) wird per Datenfernübertragung (8) vom Rechner (4) betrieben. Der Rechner (4) verfügt über eine Grafikeinheit (5), die z. B. aus einer Grafikkarte (6) besteht, die als separate Karte ausgebildet oder auf der Hauptplatine des Rechners (4) integriert ist. Ansonsten kann die Grafikhardware in beliebig geeigneter anderer Weise ausgebildet sein. Die Grafikeinheit (5) verfügt über eine vorzugsweise eigenständige Schnittstelle (7) mit der die Bildinformationen per Datenfernübertragung (8) an den Bildschirm (12) des Programmiergerätes (10) übermittelt werden. Der Rechner (4) kann selbst ebenfalls einen entsprechenden Bildschirm (12) aufweisen, der ebenfalls von der Grafikeinheit (5) betrieben wird.

Die serielle Schnittstelle (7) ist vorzugsweise auf der Grafikkarte (6) bzw. der Grafikeinheit (5) integriert und dieser direkt zugeordnet. Die als Parallelsignal generierten Bildinformationen der Grafikeinheit (5) werden durch einen geeigneten Wandler (9) in serielle Signale umgewandelt und der Schnittstelle (7) übermittelt. Bei den Bildinformationen handelt es sich vorzugsweise um die Ansteuersignale, die ein Bildschirm zum direkten Bildaufbau benötigt. Bei heutigen Bildschirmen (12) sind dies Pixel-Informationen, insbesondere Farbinformationen rot/grün/blau und die Pixel-Position. In der bevorzugten Ausführungsform kommt die VGA-Darstellung mit einer Auflösung von 640 x 480 Pixel zum Einsatz.

Der Bildschirm (12) im Programmiergerät (10) besitzt eine integrierte Pixelansteuerung. Er wird direkt mit den von der Grafikeinheit (5) übermittelten Bildinformationen gespeist. Auf eine eigene komplette Grafikkarte im Programmiergerät (10) kann dadurch verzichtet werden. Einzelne leichte Graphikelemente zur Wandlung oder Aufbereitung der Bildinformationen können je nach Bildschirmtyp vorhanden sein. Zum Empfang der Bildinformationen hat der Bildschirm (12) ebenfalls eine serielle Schnittstelle (7) mit einem nachgeschalteten Wandler (9), der die seriellen Signale in parallele Signale umwandelt.

Die Datenfernübertragung (8) kann in beliebig geeigneter Weise ausgebildet sein. Im gezeigten Ausführungsbeispiel handelt es sich um zwei- oder dreiadrige elektrische Kabelverbindungen. An die Schnittstellen (7) können aber auch drahtlose Kommunikationseinrichtungen angeschlossen sein, die die Daten per Funk, Infrarot oder auf geeignete andere Weise übertragen.

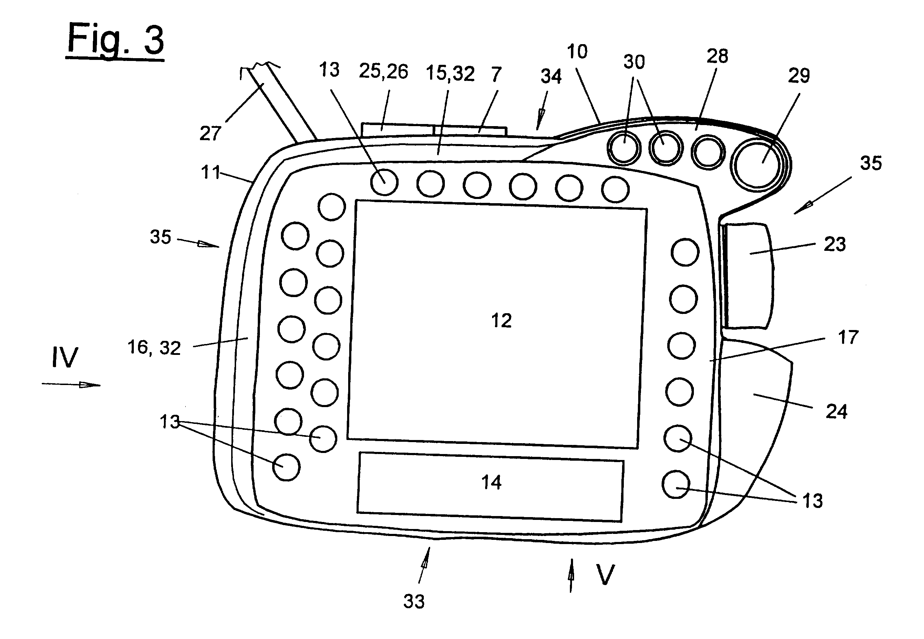

In Figur 3 bis 6 ist das Programmiergerät (10) in seiner weiteren Ausbildung näher dargestellt.

Das Programmiergerät (10) hat ein im wesentlichen quaderförmiges querliegendes Gehäuse mit ergonomisch abgerundeten Kanten, das drei oder mehr, vorzugsweise vier ergonomisch ausgeformte Griffbereiche (15,16,17,18) aufweist. Der Bediener kann das Programmiergerät (10) dadurch auf unterschiedliche Weise halten und bedienen.

An zwei oder mehr Gehäuserändern (34,35) befinden sich Griffleisten (15,16,17), die an die Handform angepaßt und an das Gehäuse (11) angeformt bzw. integriert sind. Sie besitzen griffgünstige Oberflächen, die z.B. aufgerauht oder mit Riefen versehen sind. In der bevorzugten Ausführungsform befinden sich die Griffleisten (15,16,17) am hinteren Gehäuserand (34) und den beiden seitlichen Gehäuserändern (35).

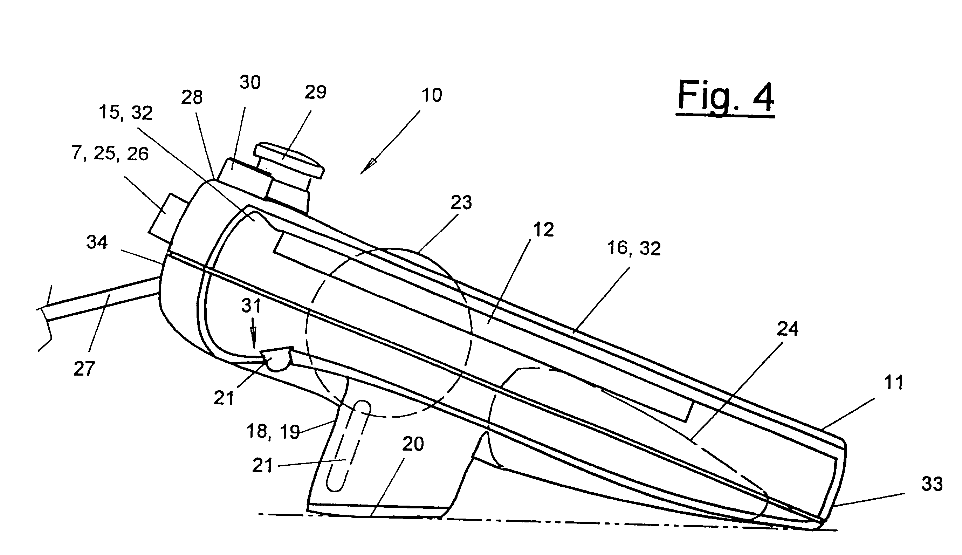

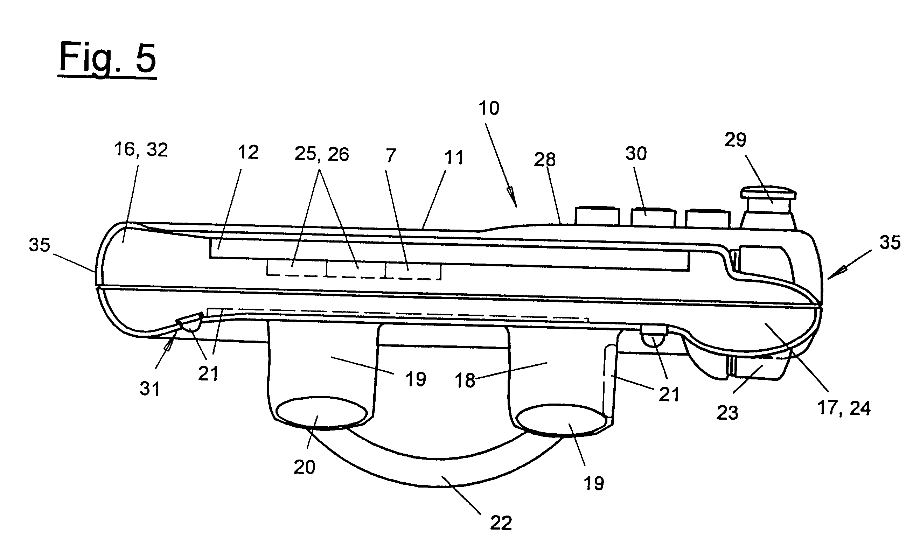

Wie aus Fig. 4 und 5 ersichtlich, bestehen die hintere und die linke Griffleiste (15,16) jeweils aus einem an der Gehäuseoberseite angeformten leistenförmigen Höcker (32) und einer an der Gehäuseunterseite befindlichen korrespondierenden Griffmulde (31). Die Höcker (32) dienen zur Stützung des Handwurzelbereichs nebst Ballen. Die Finger umgreifen die Gehäuseränder (34,35) und finden in den ebenfalls leistenförmigen Griffmulden (31) Halt.

Auf der rechten Gehäuseseite (35) ist die Griffleiste (17) etwas anders ausgebildet. Sie besitzt eine seitlich vorstehende und der Handform angepaßte Ballenauflage (24), die sich entlang des seitlichen Gehäuserands (35) erstreckt. Die Ballenauflage (24), die zugleich einen Griff bildet, verbreitert sich ausgehend vom vorderen Gehäuserand (33) zunehmend und springt dann wieder zurück. Die Ballenauflage (24) ist gegenüber der Gehäuseoberfläche in der Höhe etwas abgesenkt. An der Unterseite befindet sich ebenfalls eine längslaufende Griffmulde (31).

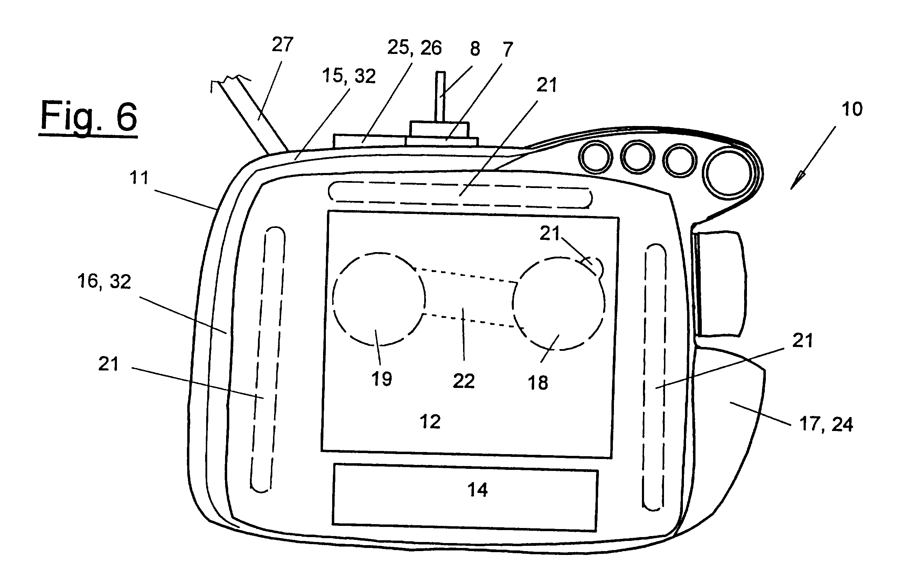

Der vierte Griffbereich (117) ist an der Gehäuseunterseite angeordnet und besteht aus einem Griffzapfen (18) (vgl. Fig. 6). Dieser steht senkrecht von der Gehäuseunterseite ab und befindet sich in der rechten Hälfte des Programmiergeräts (10). Er ist für die linke Hand vorgesehen, wobei das Programmiergerät (10) auf dem Unterarm des Bedieners abgestützt werden kann. Die Anordnung der Griffleiste (17) bzw. Ballenauflage (24) und des Griffzapfens (18) können für Linkshänder auch auf die andere Gehäuseseite verlegt werden, so daß bei entsprechender Umgestaltung des Gehäuses (11) das Programmiergerät (10) auch für Linkshänder angepaßt werden kann.

Mit den vorbeschriebenen Griffbereichen (15,16,17,18) kann der Bediener das Programmiergerät (10) auf mindestens drei vorgesehene Weisen halten. Zum einen kann er es mit beiden Händen an den seitlichen Griffleisten (16,17) fassen. Er kann es auch mit der linken Hand an der hinteren Griffleiste (15) halten und in der Hüfte abstützen. Die dritte Möglichkeit ist die vorerwähnte Haltung am Griffzapfen (18). Schließlich kann das Programmiergerät (10) auch in der nachfolgend beschrieben Weise auf einem Untergrund in ergonomisch günstiger Bedienlage abgestellt werden.

Auf der Oberseite des Gehäuses (11) sind die meisten Bedienelemente des Programmiergeräts (10) angeordnet. Im vorzugsweise mittleren Bereich befindet sich der Bildschirm (12). Darunter ist beispielsweise ein Tastaturfeld (14) angeordnet, das eine alphanumerische oder eine Schreibmaschinentastatur und ggf. weitere Bedientasten, wie Cursor-Tasten oder dgl. beinhalten kann.

Der Manipulator wird in seinen Bewegungen und/oder Funktionen maßgeblich auch durch Funktionstasten (13) gesteuert, die vorzugsweise oberhalb und zu beiden Seiten des Bildschirms (12) angeordnet sind. Die Funktionstasten (13) sind vorzugsweise jeweils in ein oder zwei parallelen Reihen angeordnet, die sich in der Nähe und längs der Griffleisten (15,16,17) erstrecken. Die Funktionstasten sind dabei so angeordnet, daß sie sich in Fingergreifnähe befinden und insbesondere mit den Daumen leicht und bequem erreichbar sind. Entsprechend der Mehrfachanordnung der Griffbereiche (15, 16, 17) können auch die Funktionstasten (13) mehrfach vorhanden sein. Der Bediener kann dadurch die gleiche Funktion an mehreren Stellen und in verschiedenen Griffbereichen auslösen.

An der Gehäuseunterseite befinden sich an einer oder mehreren Griffleisten (15,16,17) Schalttasten (21), die vorzugsweise im Bereich der Griffmulde (31) angeordnet sind. Hierbei handelt es sich beispielsweise um Zustimmungstasten und/oder Start/Stop-Tasten. Die Schalttasten (21) können, wie in Fig. 6 gezeigt, aus länglichen Schaltleisten oder aus mehreren kürzeren Schaltelementen bestehen. Am Griffzapfen (18) sind ebenfalls ein oder mehrere Schalttasten (21) mit den Fingern erreichbar angeordnet. Gegebenenfalls kann auch im Daumenbereich noch eine Taste (nicht dargestellt) sein.

Das Programmiergerät (10) weist ein mehrachsig bewegliches Steuerorgan (23) auf, dessen Bewegungen auf die translatorischen und rotatorischen Achsen des Manipulators übertragen werden. In der bevorzugten Ausführungsform ist das Steuerorgan als sechsachsiger Joystick (23) für die sechs Roboterachsen ausgebildet.

Das Steuerorgan (23) befindet sich an einem der beiden seitlichen Gehäuseränder (35) bzw. seitlichen Gehäuseflächen und kann von einer Griffleiste (17) aus bequem und ohne Umgreifen erreicht werden. Vorzugsweise sitzt das Steuerorgan (23) mit geringem Abstand hinter der Ballenauflage (24) an der rechten Gehäuseseite (35).

Das Steuerorgan (23) ist liegend angeordnet und steht seitlich vom Gehäuserand (35) ab. Es ist mit seiner Hauptachse im wesentlichen horizontal ausgerichtet. Das Steuerorgan ist als Joystick ausgebildet und besitzt im Gegensatz zum Stand der Technik eine Stummelform. Der Griff hat keinen abstehenden Stiel, sondern sitzt direkt am seitlichen Gehäuserand (35). Der Griff ist dicker als bei bekannten Joysticks und hat eine Zylinder- oder Walzenform, deren Gestalt und Größe an die Muldenform der hohlen, leicht gewölbten Hand angepaßt ist.

Der Joystick (23) kann in der 6-D-Version um die drei Raumachsen gedreht oder gekippt werden und auch um die drei Raumachsen translatorisch verschoben werden. Die Hand des Bedieners wird dabei auf der Ballenauflage (24) abgestützt, wobei die Griffwalze des Joysticks (23) mit Daumen, Zeige- und Mittelfinger ergriffen und betätigt werden kann. Über die Griffleiste (17) und die Ballenauflage (24) kann der Bediener das Gerät mit der rechten Hand halten und zugleich den Joystick bedienen. Außerdem kann er gleichzeitig die benachbarten Funktionstasten (13) mit dem Daumen erreichen und betätigen. Ein Umgreifen ist nicht erforderlich.

Das Steuerorgan (23) kann in der Bewegungsdimension und der Nutzung umschaltbar sowie evtl. programmierbar sein. Dadurch kann es z.B. bei einer 2-D-Umschaltung als Maus verwendet werden, mit der sich z.B. der Cursor auf der Anzeige (12) bewegen läßt. Bei einer 1-D-Schaltung kann das Steuerorgan (23) als programmierbarer Lauf- oder Stellregler bzw. -taste für die Einstellung eines Parameters eingesetzt werden. Dank der Griffleiste (17) bzw. Ballenauflage (24) kann das Steuerorgan (23) dabei ruhig gehalten und mit der nötigen Feinfühligkeit und Genauigkeit bewegt werden.

Vorzugsweise am rechten hinteren Gehäuserand (34) befindet sich ein Gehäuseansatz (28), der nach hinten sowie seitlich vorsteht und das Steuerorgan (23) von hinten übergreift. Auf dem Gehäuseansatz (28) befinden sich ein Notschalter (29) und ein oder mehrere Geräteschalter (30). Vorzugsweise handelt es sich hierbei um Ein/Ausschalter für den Manipulator bzw. die Robotersteuerung. Ein Geräteschalter (30) kann auch ein Schlüsselschalter zum Einstellen der Betriebsarten der Robotersteuerung oder für andere Zwecke sein.

Neben dem Griffzapfen (18) befindet sich an der Gehäuseunterseite vorzugsweise mit seitlichem Abstand ein zweiter paralleler Zapfen (18). An der Gehäuseunterseite kann sich auch ein Haltegurt (22) befinden, mit dem das Programmiergerät (10) an der Hand zusätzlich befestigt werden kann. Wie Fig. 4 und 5 verdeutlichen, können die Zapfen (18,19) angeschrägte Fußflächen (20) aufweisen, die zur Gehäusevorderseite (33) geneigt sind. Dadurch kann das Programmiergerät (10) in der in Fig. 4 gezeigten Weise in Schräglage auf einem Tisch oder einer anderen festen Unterlage abgestellt werden.

Das Programmiergerät (10) besitzt außer der vorerwähnten Schnittstelle (7) für die Bilddaten vorzugsweise noch ein oder mehrere zusätzliche elektrische Schnittstellen (25,26) für den Anschluß externer Kommunikationsmittel. Vorzugsweise handelt es sich hierbei um externe Ein- oder Ausgabegeräte, z.B. eine Computertastatur, einen Monitor oder dgl.. Die Schnittstellen (7,25,26) können auch zu einer Einheit zusammengefaßt sein.

Die Steuerbefehle für die Manipulatorbewegungen werden z.B. über die Leitung (27) an die Manipulatorsteuerung (3) übermittelt. Über die Schnittstellen (7,25,26) kann zudem eine andere Daten-Verbindung mit der Manipulatorsteuerung (3), dem Rechner (4) oder einer anderen Recheneinheit, insbesondere einem tragbaren Computer, geschaffen werden. Dadurch können am Programmiergerät (10) an Ort und Stelle komplexere Arbeiten durchgeführt, z.B. Berechnungen angestellt, weitere Programmierdaten eingegeben und direkt der Robotersteuerung (3) übermittelt werden. Der Bediener muß dazu nicht den Schaltschrank (3) aufsuchen, sondern kann alle Führungs- und Programmieraufgaben an Ort und Stelle und in einem Zug erledigen. Die feste Leitung (27) kann dann evtl. entfallen.

Die Schnittstellen (7,25,26) können elektrische Steckkontakte für Kabelstecker aufweisen. Sie können zusätzlich oder alternativ versenkte Aufnahmen mit elektrischen, optischen oder sonstigen Kontakten für Schnittstellenkarten aufweisen. Hierbei kann es sich z.B. um sogenannte PCMCIA-Anschlüsse handeln. An die Schnittstellen (7,25,26) können auch Telekommunikationsmittel, z.B. Funk- oder Infrarotsender, Netzwerkkarten, Modems oder dgl. zur Kommunikation mit dem Schaltschrank, der Robotersteuerung (3), einem Netzwerk, einer übergeordneten Fertigungssteuerung oder dgl. angeschlossen werden. Auf die Leitung (27) kann gegebenenfalls verzichtet werden.

Die Schnittstellen (7,25,26) können an beliebiger und geeigneter Stelle des Gehäuses (11) angeordnet sein. In der bevorzugten Ausführungsform befinden sie sich am vorderen und/oder hinteren Gehäuserand (33,34) und sind versenkt angeordnet. In Fig. 3 sind sie der Übersichtlichkeit wegen hinten und vorspringend dargestellt. Die Schnittstellen (7,25,26) können sich unter dem Gehäuseansatz (28) befinden. Es ist auch möglich, sie im Griffbereich (15,16,17,18) zu plazieren. Die Schnittstellen (7,25,26) können ggf. mehrfach vorhanden und über verschiedene Stellen am Gehäuse (11) verteilt sein.

Die Leitung (27) befindet sich z.B. am vorderen oder hinteren Gehäuserand (33,34) und im Bereich der linken Ecke. Sie liegt dadurch außerhalb der Griffbereiche (15,16,17) und stört in keiner der möglichen Griffstellungen.

Abwandlungen der gezeigten Ausführungsformen sind in verschiedener Weise möglich. So können weniger als die vier beschriebenen Griffbereiche (15,16,17,18) vorhanden sein. Es müssen auch nicht an allen Griffbereichen Funktionstasten (13) in der beschriebenen Weise angeordnet sein. Auf den Joystick (23) kann in einer vereinfachten Ausführungsform verzichtet werden. Abwandlungen sind auch hinsichtlich der Anzeige (12) und des Tastaturfelds (14) möglich, die einfacher ausgebildet sein können. Anstelle der leistenförmigen Höcker (32) und Griffmulden (31) können stärker ausgeformte Griffelemente vorhanden sein. Das Programmiergerät (10) kann einen Tragegurt zum Anhängen an Schulter oder Hals aufweisen.

Das Programmiergerät (10) besteht vorzugsweise aus sehr leichtgewichtigen Komponenten, um das Gesamtgewicht und die Belastung des Bedieners möglichst gering zu halten.

### BEZUGSZEICHENLISTE

- 1: Steuer- und Programmiereinrichtung
- 2: Manipulator
- 3: Manipulatorsteuerung, Schaltschrank
- 4: Rechner, Personalcomputer
- 5: Graphikeinheit
- 6: Graphikkarte
- 7: Schnittstelle
- 8: Datenfernübertragung, Leitung
- 9: Wandler
- 10: Programmiergerät
- 11: Gehäuse
- 12: Bildschirm, LCD-Display
- 13: Funktionstaste
- 14: Tastaturfeld
- 15: Griffbereich, Griffleiste
- 16: Griffbereich, Griffleiste
- 17: Griffbereich, Griffleiste
- 18: Griffbereich, Zapfen, Griffzapfen
- 19: Zapfen, Stützfuß
- 20: Fußfläche
- 21: Schalttaste
- 22: Haltegurt
- 23: Steuerorgan, Joystick
- 24: Ballenauflage
- 25: Schnittstelle, Tastatur
- 26: Schnittstelle, PC
- 27: Leitung
- 28: Gehäuseansatz
- 29: Notschalter
- 30: Geräteschalter
- 31: Griffmulde
- 32: Höcker
- 33: Gehäusevorderseite, vorderer Gehäuserand
- 34: Gehäuserückseite, hinterer Gehäuserand
- 35: Gehäuseseite, seitlicher Gehäuserand

## Patentansprüche

1. Steuer- und Programmiereinrichtung (1) für einen Manipulator (2) mit einer Manipulatorsteuerung (3), einem Rechner (4) mit Graphikeinheit (5) und einem tragbaren Programmiergerät (10) mit Bildschirm (12), das per Datenfernübertragung (8) mit dem Rechner (4) verbunden ist, dadurch **gekennzeichnet,** daß der Bildschirm (12) des Programmiergeräts (10) mittels der Datenfernübertragung (8) mit der Graphikeinheit (5) des Rechners (4) verbunden ist und von dieser Graphikeinheit (5) die Bildinformationen erhält unter Verzicht auf eine komplette Graphikeinheit im Programmiergerät (10).

2. Vorrichtung nach Anspruch 1, dadurch **gekennzeichnet,** daß die Graphikeinheit (5) eine eigene Schnittstelle (7) zur Datenfernübertragung aufweist.

3. Vorrichtung nach Anspruch 1 oder 2, dadurch **gekennzeichnet,** daß die Graphikeinheit (5) eine Graphikkarte (6) mit einem Wandler (9) und einer integrierten seriellen Schnittstelle (7) aufweist.

4. Vorrichtung nach Anspruch 1, 2 oder 3, dadurch **gekennzeichnet,** daß das Programmiergerät (10) eine serielle Schnittstelle (7) aufweist, die über einen Wandler (9) mit dem Bildschirm (12) verbunden ist.

5. Vorrichtung nach einem der Ansprüche 1 bis 4, dadurch **gekennzeichnet,** daß der Bildschirm (12) als flacher LCD-Bildschirm ausgebildet ist.

6. Vorrichtung nach Anspruch 1, dadurch **gekennzeichnet,** daß der Bildschirm (12) als graphikfähiger Farbbildschirm ausgebildet ist.

7. Vorrichtung nach Anspruch 1, dadurch **gekennzeichnet,** daß das Programmiergerät (10) mehrere an seinem Gehäuse (11) versenkt angeordnete Schnittstellen (25,26) aufweist.

8. Vorrichtung nach einem der Ansprüche 1 bis 7, dadurch **gekennzeichnet,** daß die Schnittstellen (25,26) elektrische Steckkontakte für Kabelstecker aufweisen.

9. Vorrichtung nach einem der Ansprüche 1 bis 7, dadurch **gekennzeichnet,** daß die Schnittstellen (25,26) Aufnahmen mit Kontakten für Schnittstellenkarten aufweisen.

10. Vorrichtung nach Anspruch 9, dadurch **gekennzeichnet,** daß an den Schnittstellen (25,26) Kommunikationsmittel für einen drahtlosen Datenaustausch angeschlossen sind.

11. Vorrichtung nach einem der Ansprüche 1 bis 10, dadurch **gekennzeichnet,** daß das Gehäuse (11) des Programmiergeräts (10) zwei oder mehr ergonomisch ausgeformte Griffbereiche (15,16,17,18) aufweist.

12. Vorrichtung nach Anspruch 11, dadurch **gekennzeichnet,** daß an mindestens zwei Gehäuserändern (34,35) Griffleisten (15,16,17) angeformt sind, wobei zumindest ein Teil der Funktionstasten (13) in Fingergreifnähe entlang der Griffleisten (15,16,17) angeordnet sind.

13. Vorrichtung nach Anspruch 12, dadurch **gekennzeichnet,** daß die Griffleisten (15,16,17) am hinteren und den beiden seitlichen Gehäuserändern (34,35) angeordnet sind.

14. Vorrichtung nach einem der Ansprüche 11 bis 13, dadurch **gekennzeichnet,** daß an der Gehäuseunterseite zumindest bei einem Teil der Griffleisten (15,16,17) in Fingergreifnähe ein oder mehrere Schalttasten (21) angeordnet sind.

15. Vorrichtung nach einem der Ansprüche 11 bis 14, dadurch **gekennzeichnet,** daß an mindestens einem seitlichen Gehäuserand (35) ein mehrachsig bewegliches Steuerorgan (23) angeordnet ist.

16. Vorrichtung nach Anspruch 15, dadurch **gekennzeichnet,** daß das Steuerorgan (23) als sechsachsig beweglicher Joystick ausgebildet ist.

17. Vorrichtung nach einem der Ansprüche 11 bis 16, dadurch **gekennzeichnet,** daß an der Gehäuseunterseite zwei abstehende Zapfen (18,19) mit Abstand nebeneinander angeordnet sind, von denen mindestens einer als Griff ausgebildet ist.

18. Vorrichtung nach Anspruch 17, dadurch **gekennzeichnet,** daß der Griffzapfen (18) eine oder mehrere Schalttasten (21) und einen Haltegurt (22) aufweist.

## Claims

1. Control and programming device (1) for a manipulator (2) with a manipulator control (3), a computer (4) with graphics unit (5) and a portable programming device (10) with display screen (12), connected via remote transmission means (8) to the computer (4), characterized in that the display screen (12) of the programming device (10) is connected by means of the remote data transmission means (8) to the graphics unit (5) of the computer (4) and from said graphics unit (5) receives the graphic information, obviating the need for a complete graphics unit in the programming device (10).

2. Device according to claim 1, characterized in that the graphics unit (5) has its own interface (7) for remote data transmission.

3. Device according to claim 1 or 2, characterized in that the graphics unit (5) has a graphics card (6) with a converter (9) and an integrated, serial interface (7).

4. Device according to claim 1, 2 or 3, characterized in that the programming device (10) has a serial interface (7), which is connected by means of a converter (9) to the display screen (12).

5. Device according to one of the claims 1 to 4, characterized in that the display screen (12) is constructed as a flat LCD display screen.

6. Device according to claim 1, characterized in that the display screen (12) is constructed as a colour display screen with graphics capabilities.

7. Device according to claim 1, characterized in that the programming device (10) has several interfaces (25, 26) arranged in recessed manner on its housing (11).

8. Device according to one of the claims 1 to 7, characterized in that the interfaces (25, 26) have electric plug contacts for cable plugs.

9. Device according to one of the claims 1 to 7, characterized in that the interfaces (25, 26) have recesses with contacts for interface cards.

10. Device according to claim 9, characterized in that communications means for a wireless data exchange are connected to the interfaces (25, 26).

11. Device according to one of the claims 1 to 10, characterized in that the housing (11) of the programming device (10) has two or more ergonomically shaped grip areas (15, 16, 17, 18).

12. Device according to claim 11, characterized in that on at least two housing edges (34, 35) are formed grip strips (15, 16, 17), at least some of the function keys (13) being positioned in finger range along the grip strips (15, 16, 17).

13. Device according to claim 12, characterized in that the grip strips (15, 16, 17) are located on the rear and the two lateral housing edges (34, 35).

14. Device according to one of the claims 11 to 13, characterized in that one or more switching keys (21) are located on the underside of the housing and, at least for some of the grip strips (15, 16, 17), within finger range.

15. Device according to one of the claims 11 to 14, characterized in that a multiaxially movable control member (23) is located on at least one lateral housing wall (35).

16. Device according to claim 15, characterized in that the control member (23) is constructed as a joystick movable about six axes.

17. Device according to one of the claims 11 to 16, characterized in that on the housing underside two projecting pins (18, 19) are spacedly arranged in juxtaposed manner and at least one is constructed as a grip.

18. Device according to claim 17, characterized in that the grip pin (18) has one or more switching keys (21) and a holding strap (22).

## Revendications

1. Dispositif de commande et de programmation (1) pour un manipulateur (2) comprenant une commande de manipulateur (3), un calculateur (4) et son unité graphique (5) et un programmateur (10) et son écran (12) relié au calculateur (4) par télétransmission de données (8), caractérisé en ce que l'écran (12) du programmateur (10) est relié à l'unité graphique (5) du calculateur (4) par la télétransmission de données (8) et reçoit de cette unité graphique (5) les informations d'images sans nécessiter une unité graphique complète dans le programmateur (10).

2. Dispositif selon la revendication 1, caractérisé en ce que l'unité graphique (5) présente sa propre interface (7) vers la télétransmission de données.

3. Dispositif selon la revendication 1 ou 2, caractérisé en ce que l'unité graphique (5) présente une carte graphique (6) avec un convertisseur (9) et une interface (7) série intégrée.

4. Dispositif selon la revendication 1, 2 ou 3, caractérisé en ce que le programmateur (10) présente une interface (7) série, reliée à un écran (12) par l'intermédiaire d'un convertisseur (9).

5. Dispositif selon l'une quelconque des revendications 1 à 4, caractérisé en ce que l'écran (12) se présente sous la forme d'un écran plat à cristaux liquides.

6. Dispositif selon la revendication 1, caractérisé en ce que l'écran (12) se présente sous la forme d'un écran couleur graphique.

7. Dispositif selon la revendication 1, caractérisé en ce que le programmateur (10) présente plusieurs interfaces (25,26) disposées encastrées dans son boîtier (11).

8. Dispositif selon l'une quelconque des revendications 1 à 7, caractérisé en ce que les interfaces (25,26) présentent des contacts enfichables pour des fiches de câble.

9. Dispositif selon l'une quelconque des revendications 1 à 7, caractérisé en ce que les interfaces (25,26) présentent des logements de réception à contact pour des cartes d'interface.

10. Dispositif selon la revendication 9, caractérisé en ce que des moyens de communication pour un échange de données sans fil sont reliés aux interfaces (25,26).

11. Dispositif selon l'une quelconque des revendications 1 à 10, caractérisé en ce que le boîtier (11) du programmateur (10) présente au moins deux zones de préhension (15,16,17,18) de conformation ergonomique.

12. Dispositif selon la revendication 11, caractérisé en ce que des rebords de préhension (15,16,17) sont formés sur au moins deux bords (34,35) du boîtier, une partie au moins des touches de fonction (13) étant disposées à portée de doigt le long des rebords de préhension (15,16,17).

13. Dispositif selon la revendication 12, caractérisé en ce que les rebords de préhension (15,16,17) sont disposés sur le bord arrière et les deux bords latéraux (34,35) du boîtier.

14. Dispositif selon l'une quelconque des revendications 11 à 13, caractérisé en ce qu'une ou plusieurs touches de commutation (21) sont disposées à portée de doigt en sous-face du boîtier au moins près d'une partie des rebords de préhension (15,16,17).

15. Dispositif selon l'une quelconque des revendications 11 à 14, caractérisé en ce qu'un organe de commande multiaxial mobile est disposé sur au moins un bord (35) latéral du boîtier.

16. Dispositif selon la revendication 15, caractérisé en ce que l'organe de commande (23) est conformé en joystick mobile à six axes.

17. Dispositif selon l'une quelconque des revendications 11 à 16, caractérisé en ce que deux plots en saillie (18,19) sont disposés adjacents à distance l'un de l'autre sur la face inférieure du boîtier, dont l'un au moins présente une conformation en poignée.

18. Dispositif selon la revendication 17, caractérisé en ce que le plot de préhension (18) présente une ou plusieurs touches de commutation (21) et une sangle de maintien (22).
